# EUROPEAN PATENT APPLICATION

(11) **EP 2 752 786 A1**
(43) Date of publication of application: **09.07.2014**
(21) Application number: 12828450.2
(22) Date of filing: 28.08.2012
(51) Int. Cl.: G06F 21/60, G06F 17/30

(54) **DE-IDENTIFICATION DEVICE AND DE-IDENTIFICATION METHOD**

(30) Priority: 02.09.2011 JP 2011191355
(71) Applicant: NEC Corporation, Tokyo 108-8001 (JP)
(72) Inventor: ITO, Naoko, Tokyo 108-8001 (JP); TAKENOUCHI, Takao, Tokyo 1088001 (JP)
(74) Representative: Vossius & Partner
(86) International application number: PCT/JP2012/072282
(87) International publication number: WO 2013/031997

(57) **Abstract**

Provided are a de-identification device and a de-identification method in which all data satisfy requested levels of anonymity for each, and which prevents loss of information value that is based on abstraction of the entire data collection. This de-identification device includes: de-identification means for performing de-identification processing in which a group of data is treated as a processing unit for a data collection which includes two or more data; anonymity level setting means for setting an adaptive anonymity level for each group; and anonymity assessment means for assessing whether or not a group satisfies the set adaptive anonymity level. The de-identification means, on the basis of the assessment result of the anonymity assessment means, additionally performs de-identification processing for the data collection for which de-identification processing has been performed.

## Description

### FIELD OF THE INVENTION

The present invention relates to an anonymization technology.

### BACKGROUND OF THE INVENTION

Statistical data about data including personal information such as an age, a gender or an address is being opened to the public and used. There is known a technology for anonymizing the data by using data abstraction in order to prevent an individual from being specified based on the published data at the time of publishing data. Anonymization is a technology which processes data so that which individual data may not be specified to each record (a set of personal information and the like) in the set of personal information. As a well-known index of anonymization, there is k-anonymity. K-anonymity is what is assured that data is not narrowed down to less than k data. Among attributes included in personal information, attributes (and an attribute group which is a set of attributes) which can specify an individual based on a combination of the attributes is called quasi-identifiers. Basically, anonymization for securing k-anonymity assures k-anonymity by generalizing an attribute value included in this quasi-identifier, and making the number of records sharing the quasi-identifier be k or over.

For example, in patent document 1 and patent document 2, there is disclosed public information privacy preserving devices for processing data in order to protect privacy in published information.

In a privacy preserving apparatus of patent document 1, a setting means sets an order of priority (weighting) to each attribute of data by considering a required condition of a user who uses public information.

A calculating means calculates an evaluation point of each data based on the set order of priority (weighting).

A processing method selection means selects a data processing method by which a decrease of the calculated evaluation point becomes smallest, and next, selects a data processing method by which an increase of the calculated evaluation point becomes biggest.

A data processing means processes data using the selected processing methods. The data processing means processes the data from the lowest priority order (weighting) set by the setting means until k-anonymity is satisfied.

A privacy preserving apparatus of patent document 1 solves a problem of a lack of information required by a data user based on adopting the above-mentioned constitution and dealing with all data equally.

And, in patent document 3, there is disclosed an information processing device which anonymizes information using a judgment of whether or not anonymization is done as a whole when anonymization is performed to each item of data.

And, in patent document 4, there is disclosed an information processing device which can set a secure level dynamically.
[Patent document 1] Japanese Patent Application Laid-Open No. 2011-128862
[Patent document 2] Japanese Patent Application Laid-Open No. 2011-113285
[Patent document 3] Japanese Patent Application Laid-Open No. 2010-086179
[Patent document 4] Japanese Patent Publication No. 4507569
[Non-patent document 1] "On Variable Constraints in Privacy Preserving Data Mining", Charu C. Aggarwal, Philip S. Yu. IBM T. J. Watson Research Center (carried in Proceedings of the Fifth SIAM International Conference on Data Mining, Newport Beach, CA, April 21-23, 2005. ISBN 0-89871-593-8) http://www.siam.org/proceedings/datamining/2005/dm05_11aggarwalc.pdf

### SUMMARY OF THE INVENTION

However, in the technologies described in patent documents 1-4, if at least one data of a person whose request level of anonymization is high is included in a data set, the information value of the whole data set drops. The reason of this is because the whole data set is abstracted in order to satisfy the level of the k-anonymity according to the data of the person of the highest request level.

In addition, a technology which considers a request level of each data is described in non-patent document 1. The technology described in non-patent document 1 divides a data set into groups based on a request level. When described concretely, it is as follows. First, the technology described in non-patent document 1 divides a data set into data which has similar k request level of discriminability (the narrowed number as data of a specific user in a data set just like k of anonymity). Then, the technology described in non-patent document 1 groups data according to a semantic similarity degree for each divided data set. Here, the size of each group satisfies a request level. However, in each group processed for each request level, when data within a single group are largely dispersed, or when a group is closed to another group that neighbors, the technology described in non-patent document 1 moves data. However, the technology described in non-patent document 1 divides a data set based on the request level. Therefore, when the number of data which has a similar request level is not sufficient, data in the group is not necessarily constructed of resemble data. As the technology described in non-patent document 1, when applied for the purpose of keeping statistics values, it is not a problem in particular that data in the group is not resemble necessarily. However, it is difficult to apply the technology described in non-patent document 1 to anonymization which needs abstraction which is meaningful as data.

An object of the present invention is to provide an anonymization device and an anonymization method in which all data satisfies request levels of anonymization, and can prevent a decline of information value based on a whole data set being abstracted.

### [Means for solving the problem]

To achieve the above-mentioned object, an anonymization device according to the present invention includes: anonymization means for executing anonymization processing to a data set including two data or over with making each group of the data as a processing unit; anonymous level setting means for setting an adaptive anonymous level to each of the groups of the data set executed the anonymization processing; anonymity judgment means for judging whether or not the group satisfies the set adaptive anonymous level; and further the anonymization means executes anonymization processing to the data set executed the anonymization processing based on the judgment result by the anonymity judgment means.

To achieve the above-mentioned object, an anonymization method according to the present invention, includes: executing anonymization processing to a data set including two data or over with making each group of the data as a processing unit; setting an adaptive anonymous level to each of the groups; judging whether or not the group satisfies the set adaptive anonymous level having; and further executing anonymization processing to the data set executed anonymization processing based on the judgment result.

To achieve the above-mentioned object, a program causing a computer to execute: executing anonymization processing to a data set including two data or over with making each group of the data as a processing unit; setting an adaptive anonymous level to each of the groups; judging whether or not the group satisfies the set adaptive anonymous level; and further executing anonymization processing to the data set executed anonymization processing based on the judgment result.

### [Effect of the invention]

An example of the effect of the present invention is that all data satisfies respective request level of anonymization, and can prevent a decline of information value based on a whole data set being abstracted.

### BRIEF DESCRIPTION OF THE DRAWINGS

[Fig. 1] Fig. 1 is a diagram illustrating the initial state of an example of a data set to be a target of anonymization processing.
[Fig. 2] Fig. 2 is a diagram illustrating an example of a state that the data set to be a target of anonymization processing shown in Fig. 1 is divided.
[Fig. 3] Fig. 3 is a block diagram showing an example of a structure of an anonymization device 10 according to a first exemplary embodiment of the present invention.
[Fig. 4] Fig. 4 is a flow chart showing an example of operations of the anonymization device 10 according to the first exemplary embodiment of the present invention.
[Fig. 5] Fig. 5 is an image drawing of an example of a classification tree used for data division which is anonymization processing.
[Fig. 6] Fig. 6 is a diagram indicating an example of an adaptive anonymous level which is set to each group.
[Fig. 7] Fig. 7 is a diagram illustrating an example of a state of a data set in which the data set shown in Fig. 6 is divided further, and an adaptive anonymous level is set to each group.
[Fig. 8] Fig. 8 is a diagram illustrating an example of a state of a data set which is modified groups.
[Fig. 9] Fig. 9 is a block diagram showing an example of a structure of an anonymization device 20 according to a second exemplary embodiment.
[Fig. 10] Fig. 10 is a flow chart showing an example of operations of the anonymization device 20 according to the second exemplary embodiment of the present invention.
[Fig. 11] Fig. 11 is a diagram showing an example of a state in which a data set is divided into each group including one data which is a minimum value.
[Fig. 12] Fig. 12 is a diagram illustrating an example of a state of a data set in which groups are integrated and an adaptive anonymous level is set newly.
[Fig. 13] Fig. 13 is a diagram showing an example of a state in which the data sets of Fig. 12 are integrated further.
[Fig. 14] Fig. 14 is a diagram showing an example of a state in which the data sets of Fig. 13 are integrated further.
[Fig. 15] Fig. 15 is a diagram showing an example of a state in which the data sets of Fig. 14 are integrated further.
[Fig. 16] Fig. 16 is a diagram showing an example of a state in which the data sets of Fig. 15 are integrated further.
[Fig. 17] Fig. 17 is a diagram showing an example of a state in which the data sets of Fig. 16 are integrated further.
[Fig. 18] Fig. 18 is a block diagram showing an example of a structure of an anonymization device 30 according to a third exemplary embodiment.
[Fig. 19] Fig. 19 is a flow chart of an example of operations of the anonymization device 30 according to the third exemplary embodiment.
[Fig. 20] Fig. 20 is a block diagram showing an example of a hardware configuration of the anonymization device 10 according to the first exemplary embodiment.

### EXEMPLARY EMBODIMENT OF THE INVENTION

### <First exemplary embodiment>

First, in order to make an understanding of a first exemplary embodiment of the present invention, a technology related to this exemplary embodiment will be described.

In the beginning, terms used in the following description will be arranged.

Sensitive information (sensitive information) is information which is not wanted to be known by others.

A quasi-identifier is information which can specify a user based on a combination of background knowledge and information, that is, it is information to be an identifier. In addition, there is a case where a quasi-identifier includes sensitive information.

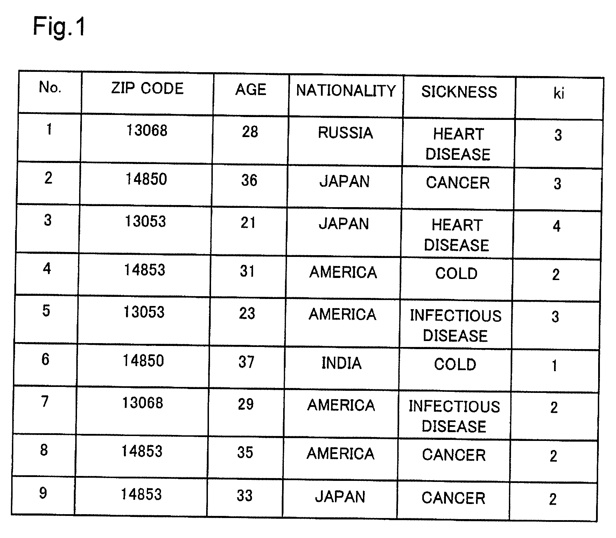

And, as an example for explanation, it is assumed a case where a provider who discloses data to be used for analysis after applying anonymization processing to the data (hereinafter, referred to as a "disclosure provider") holds data shown in Fig. 1 as medical record data of a medical service provider of a hospital.

Fig. 1 is a diagram illustrating the initial state of an example of a data set to be a target of anonymization processing for this description. As shown in Fig. 1, the disclosure provider holds data including "ZIP code", "age", "nationality", "sickness" and "ki".

In this exemplary embodiment, it is supposed that information about "sickness" is sensitive information. However, in this exemplary embodiment, it is supposed that sensitive information is used for analysis of data. Accordingly, sensitive information ("sickness" in Fig. 1) becomes information which is not wanted to be abstracted in this exemplary embodiment.

Therefore, this exemplary embodiment abstracts at least part of the quasi-identifiers other than the sensitive information ("sickness").

"ki" means a request level of k-anonymity. K-anonymity is an index which requires that the number of data including a same combination of quasi-identifiers is k or more. Data is operated as a group. Accordingly, information of the quasi-identifier is abstracted so that a group satisfies the request level of k-anonymity. The symbol "i" of "ki" means a number (number) which identifies data. For example, "i" of "ki" of the data of No. 2 is "2". And, the request level of the data of No. 2 is expressed with "k2", and its value is "3" (refer to Fig. 1).

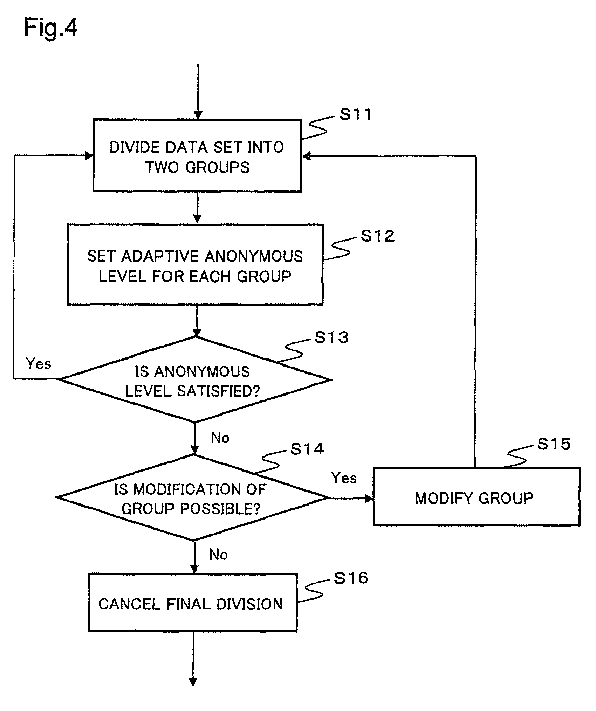

The technology related to this exemplary embodiment sets a request level of the highest k-anonymity among data held by the data set to whole data possessed by the disclosure provider as an "optimum k-anonymity level". In the case of the data set shown in Fig. 1, 4 (k3 = 4) which is the highest request level becomes the optimum k-anonymity level.

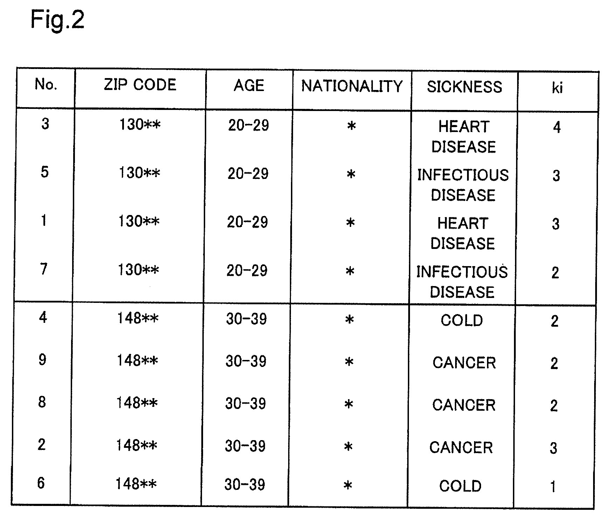

The technology related to this exemplary embodiment, for example, divides the data shown in Fig. 1 into two groups as shown in Fig. 2.

Fig. 2 is a diagram illustrating an example of a state that the data set shown in Fig. 1 to be a target of anonymization processing is divided.

As shown in Fig. 2, data shown in Fig. 1 is divided into two groups of twenties (the data of No. 1, 3, 5 and 7) and thirties (data of No. 2, 4, 6, 8 and 9) about age which is one of the quasi-identifiers. At that time, "age" is abstracted to "20-29" and "30-39", for example. And, "ZIP code" is abstracted to "130**" and "148**", for example. Further, nationality is abstracted to "*", for example. Identification of an individual is prevented based on these abstractions.

Here, the number of data of the group of twenties is "4". And, the number of data of the group of thirties is "5". Any group satisfies "4" of the optimum k-anonymity level.

The related technology of this exemplary embodiment does not divide data any more. The reason of this is because the both of the groups will not satisfy the optimum k-anonymity level if divided furthermore because the optimum k-anonymity level is set to the group of twenties and the group of thirties evenly.

However, neither of the request levels of data belonging to the group of thirties is requesting "4" which is the optimum k-anonymity level. In other words, information on the quasi-identifiers of the data belonging to the group of thirties is abstracted more than necessary.

That is, because the related technology of this exemplary embodiment executes anonymization processing in compliance with the highest request level within the data set, there is a problem that the information value of the whole data set drops.

The first exemplary embodiment of the present invention described below settles the above mentioned problem of the related technology.

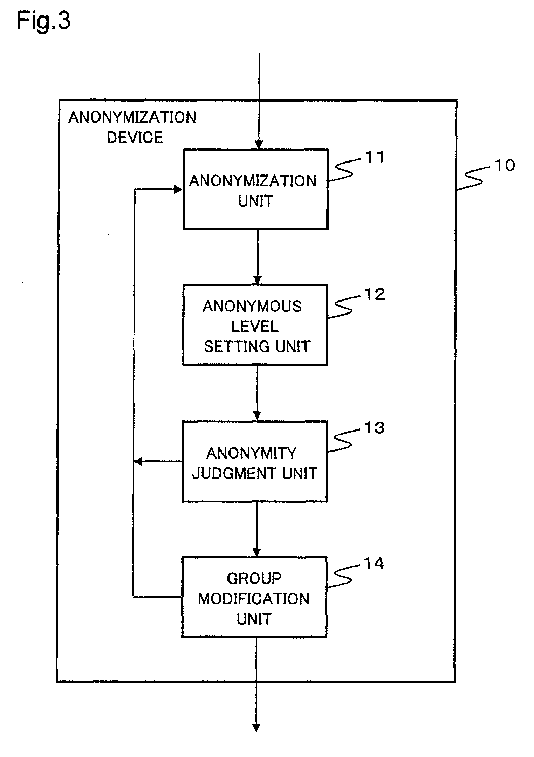

First, with reference to Fig. 3, a functional configuration of the anonymization device 10 according to the first exemplary embodiment of the present invention will be described.

Fig. 3 is a block diagram showing an example of the configuration of the anonymization device 10 according to the first exemplary embodiment. As shown in Fig. 3, the anonymization device 10 includes an anonymization unit 11, an anonymous level setting unit 12, an anonymity judgment unit 13 and a group modification unit 14.

The anonymization unit 11 receives a set (hereinafter, referred to as a "data set") including two data or over from an external device or system. The anonymization unit 11 may receive a data set from a storage device which is not illustrated or from a constitution unit which is not illustrated. And, as will be described in detail later, the anonymization unit 11 receives a data set from the anonymity judgment unit 13 and/or the group modification unit 14.

In addition, the anonymization device 10 of this exemplary embodiment has no limitation in particular in a technique of transmission and reception of a data set between each constitution. For example, the anonymization device 10 may store a data set in a memory unit which is not illustrated, and each constitution may read data included in the data set of the memory unit or write data in it. And, each constitution of the anonymization device 10 may transmit a data set to a next constitution directly. Further, each constitution of the anonymization device 10 may transmit partial data (for example, abstracted data, grouped data or data before executed abstraction or grouping) of a data set needed for the next constitution or later constitutions. Hereinafter, these are collectively referred to as outputting a data set or transmitting a data set, or inputting a data set or receiving a data set.

The anonymization unit 11 divides the data into groups to the received data set, and executes anonymization processing which abstracts as making a divided group be a processing unit. When receiving a data set which is already grouped, the anonymization unit 11 may divide a group included in the data set into small groups furthermore. Hereinafter, these are referred to as dividing a data set which includes dividing a group within the data set into small groups furthermore.

However, in division, anonymization processing of the anonymization unit 11 of this exemplary embodiment suppresses abstraction of data as much as possible, and processes (divides/abstracts) data so that an individual cannot be specified from disclosed data.

The anonymization processing of this exemplary embodiment is described using a top-down processing as an example. The top-down anonymization processing of this exemplary embodiment includes division processing and abstraction processing of data. In other words, in this exemplary embodiment, the anonymization unit 11 divides a data set into groups and abstracts data belonging to a group as needed. In addition, the top-down anonymization processing of the anonymization unit 11 has no limitation. This anonymization processing may be a processing which uses a classification tree or a processing which uses clustering, by focusing attention on an optional quasi-identifier, for example.

The anonymization unit 11 outputs a data set divided into groups to the anonymous level setting unit 12.

The anonymous level setting unit 12 receives the data set divided into groups from the anonymization unit 11. The anonymous level setting unit 12 sets an "adaptive anonymous level" which is a request level of anonymization to each group based on the received data set. Here, the adaptive anonymous level may be different for each group, or may be the same for some groups. However, as will be described later, this exemplary embodiment operates recursively. In other words, setting of the applicable anonymous level may be executed several times. Accordingly, this exemplary embodiment does not exclude a case where the anonymous level setting unit 12 sets a same adaptive anonymous level to all groups.

"Adaptive anonymous level" is a request level of anonymity which is set adaptively according to data belonging to a group. The anonymous level setting unit 12 may set the request level of data having the highest request level of anonymization within a group (for example, it corresponds to the optimum k-anonymity level mentioned above) to an adaptive anonymous level.

The anonymous level setting unit 12 outputs a set of data to which an adaptive anonymous level is set to each group to the anonymity judgment unit 13.

The anonymity judgment unit 13 receives the data set to which an adaptive anonymous level is set to each group from the anonymous level setting unit 12. The anonymity judgment unit 13 judges whether or not each group satisfies the adaptive anonymous level. When judging that each group satisfies the adaptive anonymous level, the anonymity judgment unit 13 outputs the data set of each group to the anonymization unit 11.

Hereafter, the anonymization unit 11, the anonymous level setting unit 12 and the anonymity judgment unit 13 repeat the processing recursively until the anonymity judgment unit 13 judges that at least one group does not satisfy the adaptive anonymous level.

When judging that at least one group does not satisfy the adaptive anonymous level, the anonymity judgment unit 13 outputs the data set to the group modification unit 14.

The group modification unit 14 modifies the group of the data set based on the judgment result of the anonymity judgment unit 13. When the shortage of data of the group which is judged as not satisfying the adaptive anonymous level can be compensated by the excess of other group, the group modification unit 14 moves the excess data of the other group for necessary to compensation to the group which does not satisfy the adaptive anonymous level.

After moving the data and modifying groups, the group modification unit 14 outputs the data set after modification to the anonymization unit 11.

Hereafter, the anonymization unit 11, the anonymous level setting unit 12, the anonymity judgment unit 13 and the group modification unit 14 repeat the described processing recursively until the group modification unit 14 judges that it cannot modify a group any more in a manner of satisfying the adaptive anonymous level in any group.

When judging as a state that it cannot modify a group in a manner that an adaptive anonymous level is satisfied in any group, the group modification unit 14 cancels the division which the anonymization unit 11 has performed finally, and returns a state to the state that all groups satisfy the respective adaptive anonymous levels. The returned data set becomes a data set divided as much as possible in the state that each group satisfies the adaptive anonymous level. Accordingly, this data set may be called a final data set.

The group modification unit 14 outputs the final data set to a display device, for example. The group modification unit 14 may output the final data set to a storage device, an external device or a system which is not illustrated.

In addition, the state that at least one group cannot be modified so as satisfying the adaptive anonymous level is, for example, the state that a shortage of data of at least one group judged as not satisfying the adaptive anonymous level cannot be compensated by data of an excess of other group. Alternatively, this state is the state that there is no excess data in other groups.

Next, with reference to Fig. 4, operations of the anonymization device 10 according to the first exemplary embodiment of the present invention will be described.

Fig. 4 is a flow chart showing an example of operations of the anonymization device 10 according to the first exemplary embodiment of the present invention.

As shown in Fig. 4, the anonymization unit 11 divides a data set outputted by external or another internal constitution unit which is not illustrated, the anonymity judgment unit 13 or the group modification unit 14 into groups, and abstracts it in each divided groups if necessary (Step S11). The number of divided groups depends on an algorithm of anonymization processing set to the anonymization unit 11 in advance, and it is not limited in particular in this exemplary embodiment. However, in the following description of this exemplary embodiment, description will be made supposing that the anonymization unit 11 divides a data set or a group in the data set into two groups as an example.

Next, the anonymous level setting unit 12 sets the adaptive anonymous levels to respective groups (Step S12). In this exemplary embodiment, the anonymous level setting unit 12 sets the request level of data having the highest request level of anonymization within a group as the adaptive anonymous level of the group.

Next, the anonymity judgment unit 13 judges whether or not each group in the data set divided into groups satisfies the adaptive anonymous level (Step S13). When judging that each group satisfies the adaptive anonymous level, the anonymity judgment unit 13 outputs the data set to the anonymization unit 11.

Hereafter, the processing of Step S11, Step S12 and Step S13 are repeated recursively until the anonymity judgment unit 13 judges that at least one group does not satisfy the adaptive anonymous level.

In Step S 13, when at least one group is judged that it does not satisfy the adaptive anonymous level, the anonymity judgment unit 13 outputs the data set to the group modification unit 14.

The group modification unit 14 judges whether or not it is possible to modify the groups in a manner that all groups satisfy the respective adaptive anonymous levels (Step S 14). Concretely, the group modification unit 14 judges whether or not a shortage of data of a group which is judged by the anonymity judgment unit 13 as not satisfying the adaptive anonymous level can be compensated by the excess of other group.

When judging that it is possible to be compensated, the group modification unit 14 moves the excess data from the other group to the group which does not satisfy the adaptive anonymous level. Based on this move, the group modification unit 14 modifies the groups so that all the groups satisfy the adaptive anonymous levels (Step S 15).

After modifying the groups, the group modification unit 14 outputs the data set to the anonymization unit 11. Hereafter, the judgment device 10 repeats the processing of Step S11, Step S12, Step S 13, Step S14 and Step S 15 recursively until the group modification unit 14 judges that it is impossible to modify a group in any group in a manner of satisfying the adaptive anonymous level.

In Step S14, when judging as a state that at least one group cannot be modified in a manner of satisfying the adaptive anonymous level, the group modification unit 14 cancels the division of the data set performed by the anonymization unit 11 finally. Then, the group modification unit 14 returns the data set to a state that all the groups satisfy the adaptive anonymous levels (Step S16). The group modification unit 14 outputs the data set (the final data set) which has the state that each group satisfies the adaptive anonymous level to a display device, for example. The group modification unit 14 may output the final data set to a storage device, an external device or a system which is not illustrated.

Next, with reference to Fig. 1, Fig. 2 and Figs. 5-7, each step of Fig. 4 will be described concretely. As a premise of this description, it is supposed that a disclosure provider having the anonymization device 10 holds the data set shown in Fig. 1. And, it is supposed that personal information about "sickness" is sensitive information.

And, in the following description, the anonymization device 10 divides data using a top-down processing that uses a classification tree.

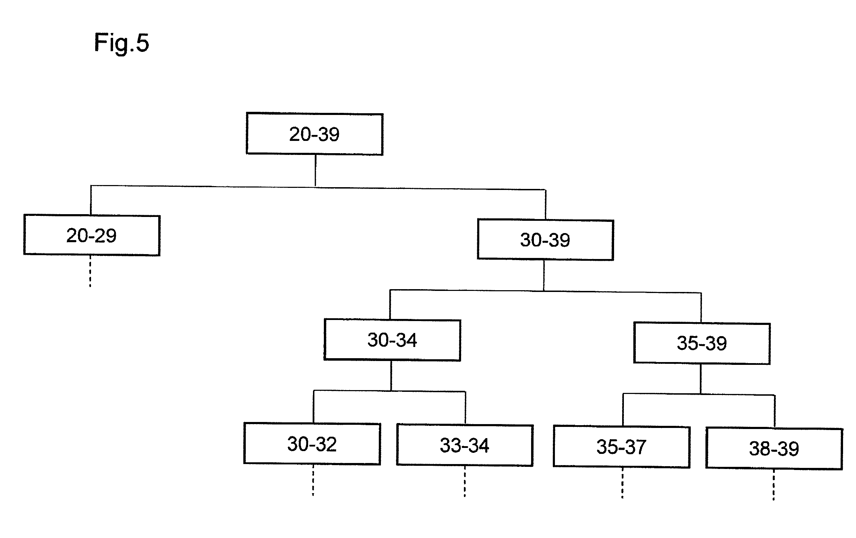

Fig. 5 is an image drawing of an example of a classification tree for data division used in the anonymization processing in the description of this exemplary embodiment. As shown in Fig. 5, in this exemplary embodiment, the anonymization unit 11 of the anonymization device 10 repeats division of data using a classification tree about "age" which is one example of a quasi-identifier and using a top-down method(, and abstraction of data if necessary). For example, first, a data set of ages 20-39 is divided into a group of twenties of ages of 20-29 and a group of thirties of ages of 30-39. Next, when explaining about the group of thirties as an example, a data set belonging to the group of ages of thirties is divided into a group of ages of 30-34 and a group of ages of 35-39. Hereafter, data sets which include a group of twenties are divided into smaller groups.

In addition, although description will be used an anonymization method using a classification tree as description of this exemplary embodiment, a technique of anonymization which the anonymization unit 11 adopts is not limited to this. The anonymization unit 11 may use a method of clustering or the like that is general. A general clustering method is a method using a mean value of values of quasi-identifiers and a k-means method, for example.

In Step S11 of Fig. 4, the anonymization unit 11 of the anonymization device 10 divides data shown in Fig. 1 into two groups of twenties and thirties as shown in Fig. 2 based on the top-down method using a classification tree (a first group division).

In Step S12 of Fig. 4, the anonymous level setting unit 12 sets the adaptive anonymous levels to the respective groups (a first adaptive anonymous level setting).

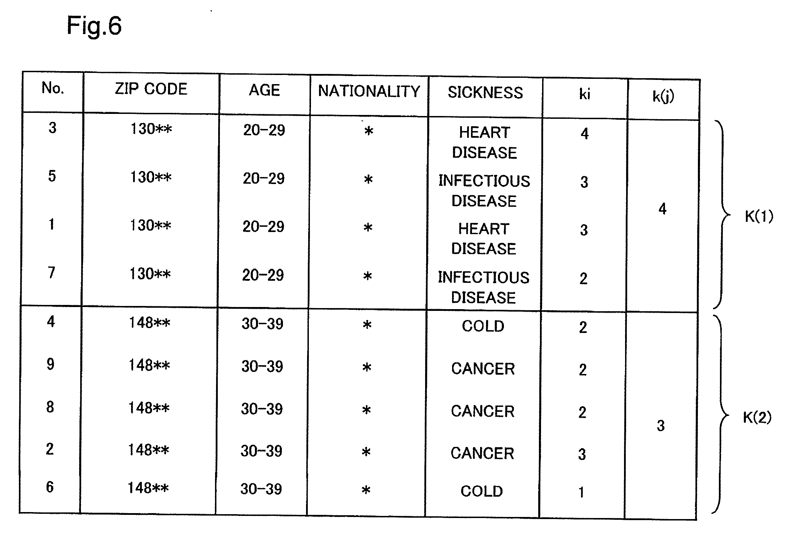

Fig. 6 is a diagram indicating an example of the adaptive anonymous level which is set to each group. In Fig. 6, an adaptive anonymous level is expressed in k(j). In addition, in Fig. 6, "j" is given in order of age from youngest to oldest. In other words, "j" of the group of twenties is "1", and "j" of the group of thirties is "2". The anonymous level setting unit 12 sets "4" of k3 which is the highest request level in the group of twenties to the adaptive anonymous level as k(1). And, the anonymous level setting unit 12 sets "3" of k2 which is the highest request level in the group of thirties to the adaptive anonymous level as k(2).

In Step S13 of Fig. 4, the anonymity judgment unit 13 judges that the group of twenties satisfies the adaptive anonymous level based on the number of data belonging to the group of j = 1 being 4 and k(1) = 4. And, the anonymity judgment unit 13 judges that the group of thirties also satisfies the adaptive anonymous level based on the number of data belonging to the group of j = 2 being 5 and k(2) = 3. Because all the groups satisfy the adaptive anonymous levels, processing of the anonymization device 10 returns to Step S11.

In Step S11 of Fig. 4, the anonymization unit 11 divides data recursively based on top-down processing using a classification tree. In other words, the anonymization unit 11 divides either group of the data set divided last time (second data division).

Here, the anonymization unit 11 may judge whether or not it is possible to divide the data set, and divide it when judging that it is possible. Alternatively, the anonymization unit 11 may divide data sets further using a classification tree without judging whether or not it is possible to divide it. As a judgment whether or not it is possible to divide, the anonymization unit 11 may judge that it is possible to divide a group when the number of data belonging to the group is "2 x ave ki(j)" (hereinafter, referred to as "2ave ki(j)" by omitting "x") or more. Here, "ave ki(j)" is the average of ki (request level of k-anonymity) of data included in group j. In the following description of this exemplary embodiment, it is supposed that the anonymization unit 11 judges whether or not it is possible to divide using this method.

In the group of j = 1 of the data set shown in Fig. 6, it is ave ki(j) = 3 and it is 2ave ki(j) = 6. The number of data of the group of j =1 is 4. Accordingly, the anonymization unit 11 judges that the group of j = 1 (here, the group of twenties) cannot be divided.

In the group of j = 2, it is ave ki(j) = 2 and it is 2ave ki(j) = 4. The number of data of the group of j = 2 is 5. Accordingly, the anonymization unit 11 judges that the group of j = 2 (here, the group of thirties) can be divided. Then, the anonymization unit 11 divides the group of j = 2 (the group of thirties) into two groups (here, a group of ages 30-34 and a group of ages 35-39) based on the top-down processing using a classification tree.

Next, in Step S12 of Fig. 4, the anonymous level setting unit 12 sets the adaptive anonymous level to each group. (Second adaptive anonymous level setting)

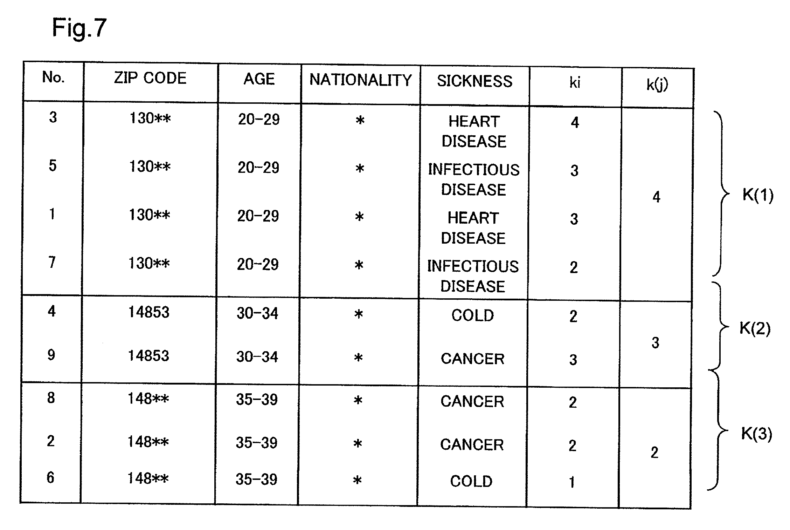

Fig. 7 is a diagram illustrating an example of a state of the data set which is set the second adaptive anonymous level after the second data division. As shown in Fig. 7, the group of j = 2 in Fig. 6 is divided into groups of j = 2 and j = 3 newly. And, the adaptive anonymous level of the group of j = 2 (k(2)) is set to "3", and the adaptive anonymous level of the group of j = 3 (k(3)) is set to "2".

Here, the group of j = 2 is that the adaptive anonymous level (k(2)) is "3". However, the number of data belonging to this group is 2. Accordingly, in Step S13 of Fig. 4, the anonymity judgment unit 13 judges that at least one group does not satisfy the adaptive anonymous level. Accordingly, the processing of the anonymization device 10 proceeds to Step S 14.

In Step S 14 of Fig. 4, the group modification unit 14 judges whether or not modification of groups is possible. Concretely, the group modification unit 14 judges whether or not there is excess data in the other group (in the present case, group of j = 3) when the anonymization unit 11 divide the group (j =2) which is judged not to satisfy the adaptive anonymous level. Then, when there is excess data, the group modification unit 14 judges whether or not it can compensate the shortage of the group (j = 2) judged not to satisfy the adaptive anonymous level by using the excess data.

Referring to Fig. 7, the other group (j = 3) is that the adaptive anonymous level (k(3)) is "2" and the number of data belonging to the group is "3". Accordingly, there exists one excess data in this group (j = 3). Accordingly, the group modification unit 14 judges that the shortage of the group (j = 2) can be modified.

In Step S 15 of Fig. 4, the group modification unit 14 moves data in the group of j = 3 which is closest to the center of gravity of the group of j = 2 on a data space to the group of j = 2.

For example, the group modification unit 14 considers a one-dimensional space which takes "age" for its axis as a data space. In this space of "age", the center of gravity of the data of the group of j = 2 is "32.5" which is the average of "31 " of No.4 and "34" of No.9.

Based on the value of this center of gravity, the group modification unit 14 moves the data of No.8 having a value of "age" of "35" which is the closest to "32.5" which is the "age" of the center of gravity of the group of j = 2 within data belonging to the group of j = 3 to the group of j = 2, and modifies the groups.

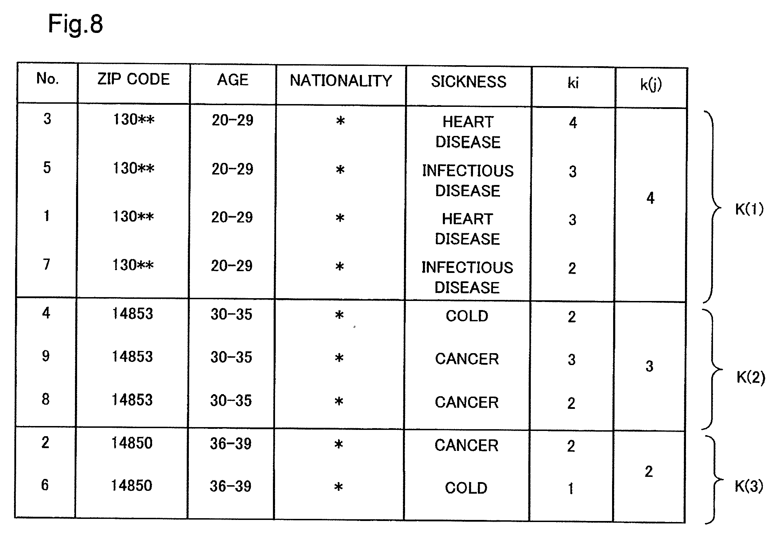

Fig. 8 is a diagram illustrating an example of a state of the data set which is modified groups. As shown in Fig. 8, data of No.8 included in the group of j = 3 in Fig. 7 moves to the group of j = 2. Along with this, about "age", the group of j = 2 becomes "30-35" and the group of j = 3 becomes "36-39".

Next, processing of the anonymization device 10 returns to Step S11 of Fig. 4. Here, in the group of j = 2, it is 2ave ki(2) = 4.666..., and, in the group of j = 3, it is 2ave ki(3) = 3. And, the number of data of the group of j = 2 is "3 ", and the number of data of the group of j = 3 is "2". For this reason, the anonymization unit 11 cannot divide both the group of j = 2 and the group of j = 3 any further.

The anonymization device 10 of this exemplary embodiment may judge whether or not all groups after modification can be divided at the time when the group modification unit 14 modifies groups. Then, at a time point when judging that it is impossible to divide the all groups after group modification by the group modification unit 14, the anonymization device 10 may output a final data set to a display device or the like, and ends processing. However, operations of the anonymization device 10 of this exemplary embodiment are not limited to this.

For example, tentatively, it is considered the case where the processing returns Step S11 and the anonymization unit 11 divides a group even though all groups become impossible to be divided after the group modification unit 14 modifies the groups. In this case, the anonymity judgment unit 13 judges that a group which does not satisfy anonymity exists in Step S 13. Then, the group modification unit 14 judges that modification of groups is impossible. Then, in this case, the processing of the anonymization device 10 proceeds to Step S16. In Step S 16, the group modification unit 14 cancels the division which the anonymization unit 11 executes finally, and returns to the data set of the state in which all groups satisfy the adaptive anonymous levels. Then, the group modification unit 14 outputs the final data set to a display device or the like.

In addition, the group modification unit 14 may be constituted as a structure which does not move data on a predetermined condition, even when the one group satisfies the adaptive anonymous level if it move the excess data included in the other group between groups divided into two. For example, a structure which does not move data is a case where a distance between the position of the center of gravity of data of the group which does not satisfy the adaptive anonymous level and the position of data closest to the center of gravity among excess data belonging to the other group on the data space is a predetermined threshold value or over. In this case, the group modification unit 14 may cancel the division which the anonymization unit 11 performs finally without modifying groups.

When described using specific values, it is a case where, in the above-mentioned example, a threshold value is 5 and the value of data belonging to the group of j = 3 which is the closest to "32.5" which is the center of gravity of data belonging to the group of j = 2 is "38". In this case, the group modification unit 14 does not move data and cancels the last division.

Here, when the data set shown in Fig. 8 which is outputted finally in this exemplary embodiment and the data set shown in Fig. 2 are compared, the data set of Fig. 8 outputted by this exemplary embodiment has lower grade of abstraction of a ZIP code and age than those of the data set shown in Fig. 2, and having a smaller decline of information values.

In addition, a structure of this exemplary embodiment is not limited to the structure shown in Fig. 3. Each structure may be divided into plural structures. And, one or more structures may be realized by one structure. For example, the anonymization unit 11 and the group modification unit 14 may be constructed as one anonymization unit 11.

As above-described, the anonymization device 10 according to the first exemplary embodiment can make all data satisfy the request levels of anonymization, and prevent a decline of an information value based on the whole data being abstracted.

The reason is because the anonymization device 10 sets the adaptive request level of anonymization (adaptive anonymous level) for each divided group. Further, it is also because the anonymization device 10 modifies groups so that the adaptive anonymous level becomes appropriate.

### <Second exemplary embodiment>

Next, an anonymization device 20 according to a second exemplary embodiment of the present invention will be described. The anonymization device 10 used for description of the first exemplary embodiment adopts top-down processing which uses a classification tree as anonymization processing. In contrast, the anonymization device 20 of this exemplary embodiment is different in the point that it adopts bottom-up processing.

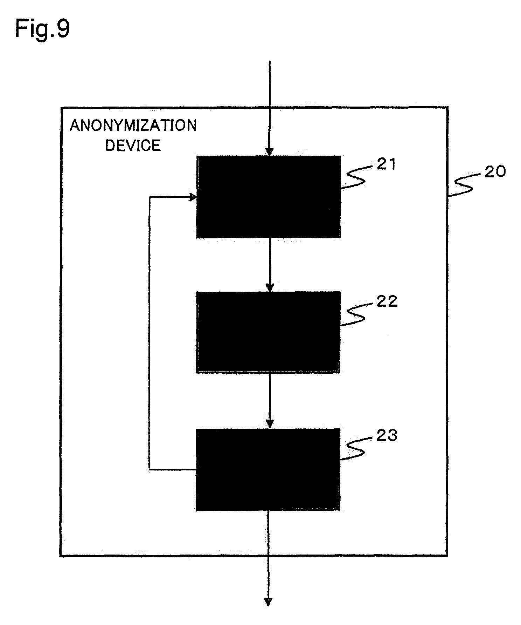

Fig. 9 is a block diagram showing an example of a structure of the anonymization device 20 according to the second exemplary embodiment. As shown in Fig. 9, the anonymization device 20 includes an anonymization unit 21, an anonymous level setting unit 22 and an anonymity judgment unit 23.

The anonymization unit 21 receives a data set of two data or over from an external device or system. The anonymization unit 21 may receive a data set from a storage device or other constitution unit which is not illustrated. And, the anonymization unit 21 receives a data set or a judgment result from the anonymity judgment unit 23.

The anonymization unit 21 executes anonymization processing to a received data set as making a group of data be a processing unit. Anonymization processing of this exemplary embodiment is bottom-up processing. Anonymization processing using bottom-up processing includes integration processing of data and abstraction processing. First, the anonymization unit 21 of this exemplary embodiment divides a data set into two groups or over so that the number of data of unit group becomes the number of data of a predetermined minimum value. The minimum value may be set to a specific value in advance, or may be set based on user's operation whenever the anonymization device 20 operates. Further, the anonymization unit 21 integrates two groups after judgment processing by the anonymity judgment unit 23, abstract data if necessary, and executes anonymization processing. There is no limitation in particular in anonymization processing performed in a bottom-up manner. For example, anonymization processing which is used may be processing which focuses on an optional quasi-identifier, integrates groups having the closest gravity-center distance from each other on a data space and abstracts, or may be processing based on NCP (Normalized Certainty Penalty).

The anonymization unit 21 outputs a data set divided into plural groups which have the number of data of a predetermined minimum value or a data set integrated groups to the anonymous level setting unit 22.

The anonymous level setting unit 22 receives the data set from the anonymization unit 21. The anonymous level setting unit 22 sets the adaptive anonymous level for each group like the anonymous level setting unit 12.

The anonymous level setting unit 22 outputs the data set to which an adaptive anonymous level is set for each group to the anonymity judgment unit 23.

The anonymity judgment unit 23 receives the data set to which an adaptive anonymous level is set for each group from the anonymous level setting unit 22. The anonymity judgment unit 23 judges whether or not each group of the data set satisfies the adaptive anonymous level. When judging that at least one group does not satisfy the adaptive anonymous level, the anonymity judgment unit 23 outputs the data set to the anonymization unit 21.

Hereafter, the anonymization unit 21, the anonymous level setting unit 22 and the anonymity judgment unit 23 repeat processing recursively until the anonymity judgment unit 23 judges that all groups satisfy the adaptive anonymous levels.

When judging that all groups satisfy the adaptive anonymous levels (a data set of this case is a "final data set"), the anonymity judgment unit 23 outputs the final data set to a display device, for example. The anonymity judgment unit 23 may output the final data set to a storage device, an external device or a system which is not illustrated.

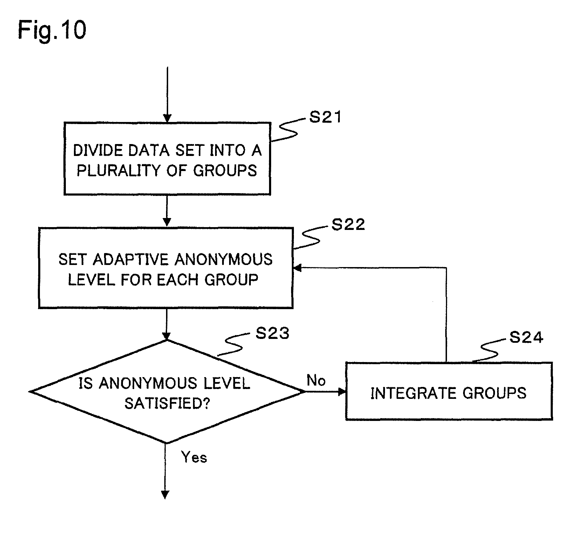

Next, with reference to Fig. 10, operations of the anonymization device 20 according to the second exemplary embodiment of the present invention will be described.

Fig. 10 is a flow chart showing an example of operations of the anonymization device 20 according to the second exemplary embodiment of the present invention. As shown in Fig. 10, the anonymization unit 21 divides a data set which is outputted from external or internal other constitution unit which is not illustrated into plural groups each which have the number of data of a predetermined minimum value (Step S21). The number of date of a minimum value may be set to a specific value or may receive a value from a user whenever the anonymization device 20 operates.

Next, the anonymous level setting unit 22 sets the adaptive anonymous level to the respective groups (Step S22). In this exemplary embodiment, the anonymous level setting unit 22 sets the request level of data which has the highest request level of anonymization within the group as the adaptive anonymous level of the group.

Next, the anonymity judgment unit 23 judges whether or not all groups of the data set satisfy the adaptive anonymous levels (Step S23). When judging that at least one group does not satisfy the adaptive anonymous level, the anonymity judgment unit 23 outputs the data set to the anonymization unit 21.

The anonymization unit 21 which receives the data set from the anonymity judgment unit 23 integrates a group and one or more other groups so that the group which does not satisfy the adaptive anonymous level satisfies the adaptive anonymous level (Step S24),.

Hereafter, the anonymization device 20 repeats the processing of Step S22, Step S23 and Step S24 recursively until the anonymity judgment unit 23 judges that all groups satisfy the adaptive anonymous levels.

In Step S23, when judging that all groups satisfy the adaptive anonymous levels (in this case, the data set is a final data set), the anonymity judgment unit 23 outputs the final data set to a display device, for example. The anonymity judgment unit 23 may output the final data set to a storage device, an external device or system which is not illustrated.

Next, each step of Fig. 10 will be described concretely with reference to Fig. 1, Fig. 2 and Figs. 11-17. Here, as a premise, it is supposed that a disclosure provider having the anonymization device 20 holds the data set shown in Fig. 1. Then, it is supposed that personal information about "sickness" is sensitive information.

And, in the following description, the anonymization device 20 integrates data based on bottom-up processing.

In Step S21 of Fig. 10, the anonymization unit 21 of the anonymization device 20 which the disclosure provider divides has divides data shown in Fig. 1 into plural groups which have the number of data of a predetermined minimum value. In the description of this exemplary embodiment, it is supposed that the predetermined minimum value is "1".

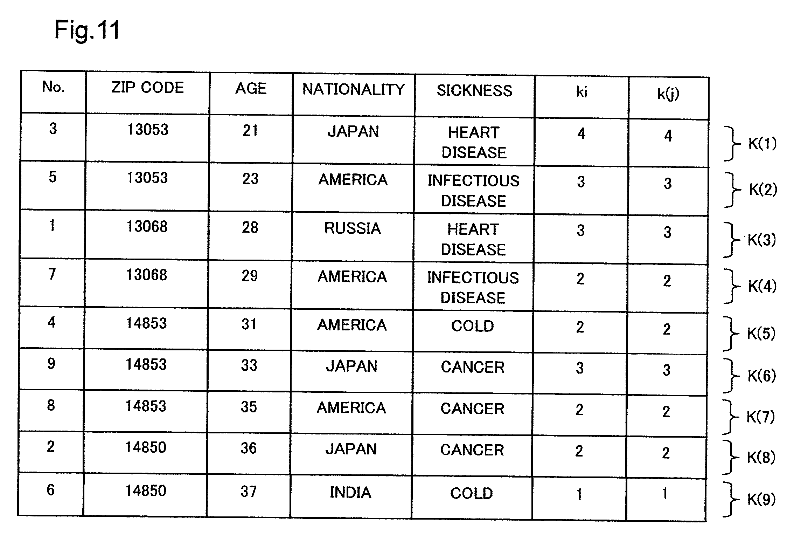

Fig. 11 is a diagram showing an example of a state in which the data set is divided into each group including data of "1" which is the minimum value. The anonymization device 20 of this exemplary embodiment executes integration processing by focusing on "age" which is one of quasi-identifiers like the first exemplary embodiment. Accordingly, in Fig. 11, data is lined in order of age from youngest to oldest for the sake of convenience.

In addition, when a predetermined minimum value is "2" tentatively, the data set will be divided into groups such as a group including two data of No.3 and No.5 and a group including two data of No.1 and No.7 shown in Fig. 11.

In Step S21 of Fig. 10, the anonymous level setting unit 22 sets the adaptive anonymous levels to the respective groups. In Fig. 11, ki which is k-anonymity of each data becomes the adaptive anonymous level k(j) of a group including each data.

In Step S23 of Fig. 10, the anonymity judgment unit 23 judges that the group of j = 9 satisfies the adaptive anonymous level based on the number of data belonging to the group of j = 9 being 1 and the adaptive anonymous level (k(9)) being "1". About groups other than j = 9, the anonymity judgment unit 23 judges that neither satisfies the adaptive anonymous levels. Because at least one group does not satisfies the adaptive anonymous level, processing of the anonymization device 20 proceeds to Step S24.

In Step S24 of Fig. 10, the anonymization unit 21 integrates data of the data set recursively based on bottom-up processing.

The anonymization unit 21 selects a group (selected group) of a target of integration processing. For example, the anonymization unit 21 may select an optional group from groups which do not satisfy the adaptive anonymous levels as the target for the processing. Alternatively, the anonymization unit 21 may select a group with the greatest difference between the value of the adaptive anonymous level and the number of data in the group among groups which do not satisfy the adaptive anonymous levels as the target for the processing. A selection technique of a target for processing of this exemplary embodiment is not limited to the method described in this specification. However, in the following description of this exemplary embodiment, description will be made supposing that the anonymization unit 21 selects a group with the greatest difference between the adaptive anonymous level and the number of data as the target for the processing.

Next, the anonymization unit 21 selects other group (integration target group) which is an integration target of the group (selected group) selected as the target for the processing.

Here, selection of the integration target group is not limited in particular. However, it is desired for the anonymization unit 21 to select a group with the smallest information based on integration processing as an integration target group. For example, the anonymization unit 21 selects a group having a position of the center of gravity closest to the position of the center of gravity of the selected group on a data space as an integration target group. Then, the anonymization unit 21 may integrate two groups (the selected group and the integration target group) which are selected. Alternatively, the anonymization unit 21 may select a group to which a degree of abstraction (for example, a width which a value of a quasi-identifier included in the group after integration takes) becomes smallest when integrated with the selected group by using the technique of NCP as the integration target group. In the description of this exemplary embodiment, it is supposed that the anonymization unit 21 selects a group with the closest gravity-center distance as the integration target group.

The anonymization unit 21 selects a group of j = 1 to which the data of No.3 having the greatest difference between the adaptive anonymous level and the number of data belongs as the target for the processing (that is, a group of j = 1 is a selected group). It is because the number of data belonging to the group of j = 1 is "1" and the adaptive anonymous level k(1) is "4", and difference between these becomes "3". The difference "3" of the group of j = 1 is the greatest compared with differences of the other groups.

The anonymization unit 21 selects a group of j = 2 which is a group to which the data of No.5 belongs as a group to be an integration target of the group of j = 1 (in other words, the group of j = 2 is the integration target group). It is because the group of j = 2 has the closest distance to the group of j = 1 on the one dimensional space taking "age" as an axis.

The anonymization unit 21 integrates the group of j = 1 and the group of j = 2.

Then, in Step S22 of Fig. 10, the anonymous level setting unit 22 sets the adaptive anonymous level newly.

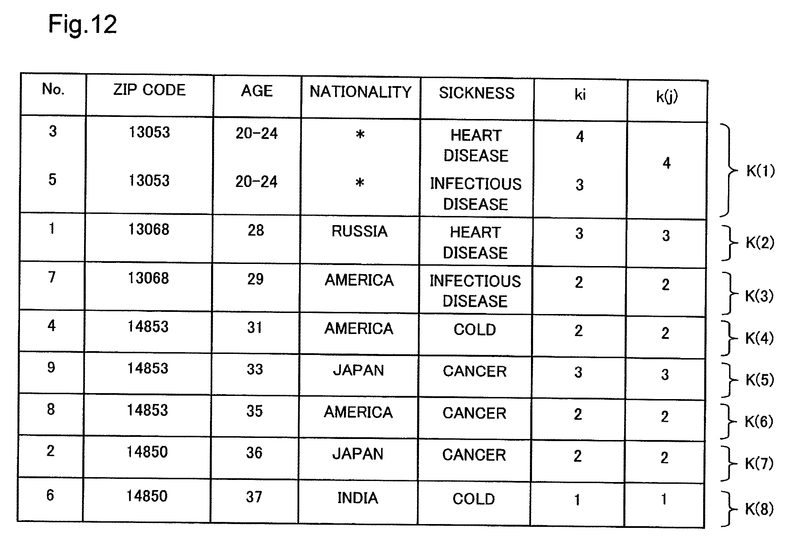

Fig. 12 is a diagram illustrating an example of a state of the data set in which the groups are integrated and the adaptive anonymous level is set newly. As shown in Fig. 12, the adaptive anonymous level (k(1)) is set "4". And, age and nationality are abstracted.

Here, in Step S23 of Fig. 10 again, the anonymity judgment unit 23 judges that at least one group does not satisfy the adaptive anonymous level. Accordingly, the processing of the anonymization device 20 proceeds to Step S24.

Hereafter, the processing of Step S22, Step S23 and Step S24 are repeated recursively until the anonymity judgment unit 23 judges that the adaptive anonymous levels are satisfied in all groups.

In Fig. 12, about the groups of j = 1, j = 2 and j = 5, the differences between the adaptive anonymous level and the number of data are "2", respectively. In this case, the anonymization unit 21 may select any one of the groups as the selected group. In this exemplary embodiment, it is supposed that the anonymization unit 21 selects a group with a younger age as the selected group of the target for the processing. Accordingly, the anonymization unit 21 selects the group of j =1 as the selected group of a target for the processing, and selects the group of j = 2 as the integration target group, and integrates them.

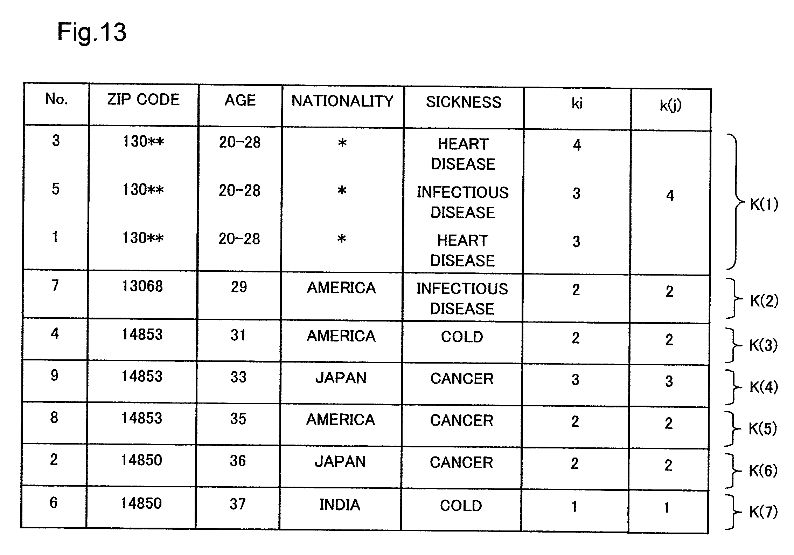

Fig. 13 is a diagram showing an example of a state in which the data set is integrated further.

Next, the anonymization unit 21 selects the group of j = 4 to which difference between the adaptive anonymous level and the number of data is greatest as the selected group. And, the anonymization unit 21 selects the group of j = 3 in which the data of No. 4 which is one of data closest to the data of No. 9 is included as the integration target group.

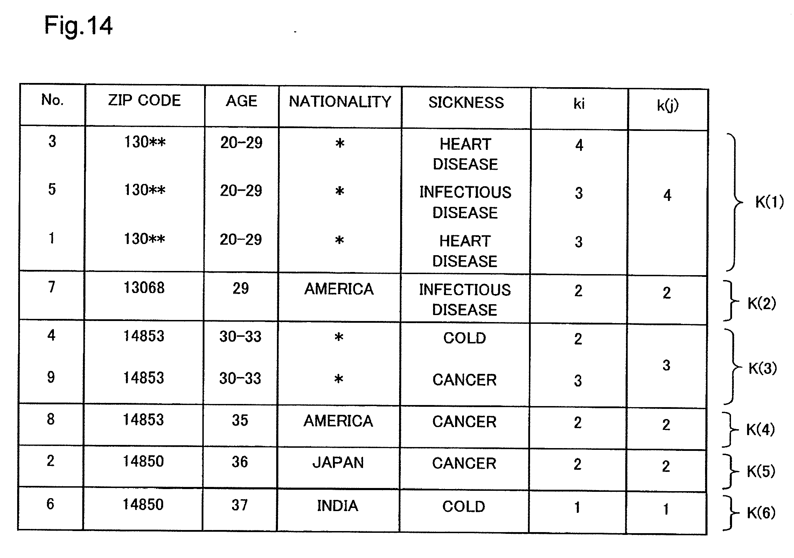

Fig. 14 is a diagram showing an example of a state in which the group of j = 4 and the group of j = 3 of Fig. 13 are integrated.

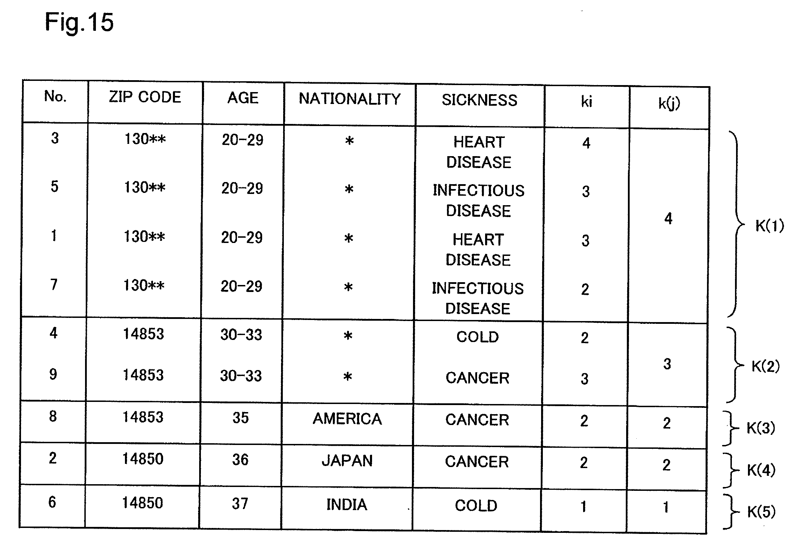

The anonymization unit 21 repeats the procedure described above, and repeats integration of groups as shown in Figs. 15-17.

Fig. 15 is a diagram showing an example of a state in which the data sets shown in Fig. 14 are integrated further.

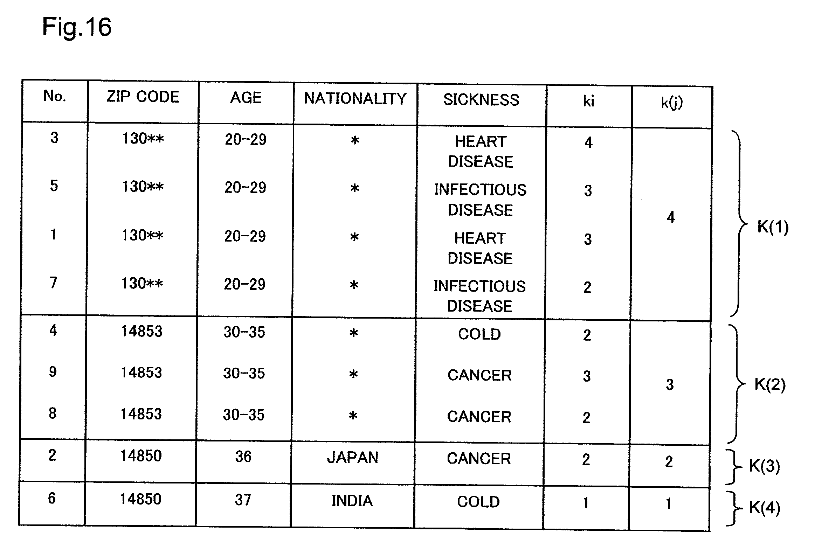

Fig. 16 is a diagram showing an example of a state in which the data sets shown in Fig. 15 are integrated further.

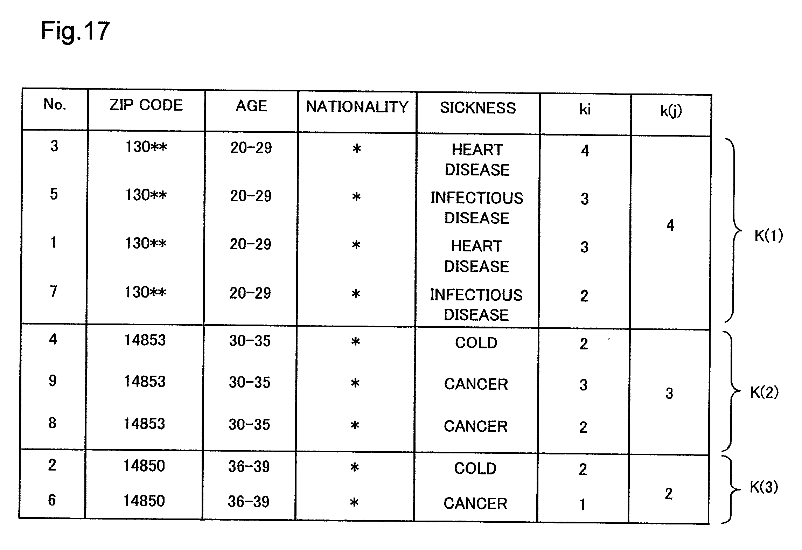

Fig. 17 is a diagram showing an example of a state in which the data sets shown in Fig. 16 are integrated further.

When the data of the data set is integrated into groups up to the state shown in Fig. 17, in Step S23 of Fig. 10, the anonymity judgment unit 23 judges that all groups satisfy the adaptive anonymous levels. The anonymity judgment unit 23 outputs the data set (final data set) of the state in which all the groups satisfy the adaptive anonymous levels to a display device and the like.

Here, when comparing the outputted final data set shown in Fig. 17 with the final data set of the first exemplary embodiment shown in Fig. 8, the final data set shown in Fig. 17 is a result similar to the first exemplary embodiment. In other words, the anonymization device 20 of the second exemplary embodiment can acquire the same effect as the anonymization device 10 of the first exemplary embodiment.

As mentioned above, the anonymization device 20 according to the second exemplary embodiment can make all data included in the data set satisfy the request levels of anonymization and prevent a decline of information values based on abstracting the whole data set.

The reason is because the anonymization device 20 sets the adaptive request level of anonymization (adaptive anonymous level) for each group. Further it is because the anonymization device 20 integrates groups so that the adaptive anonymous levels become appropriate.

### <Third exemplary embodiment>

Next, the anonymization device 30 according to the third exemplary embodiment of the present invention will be described with reference to a drawing.

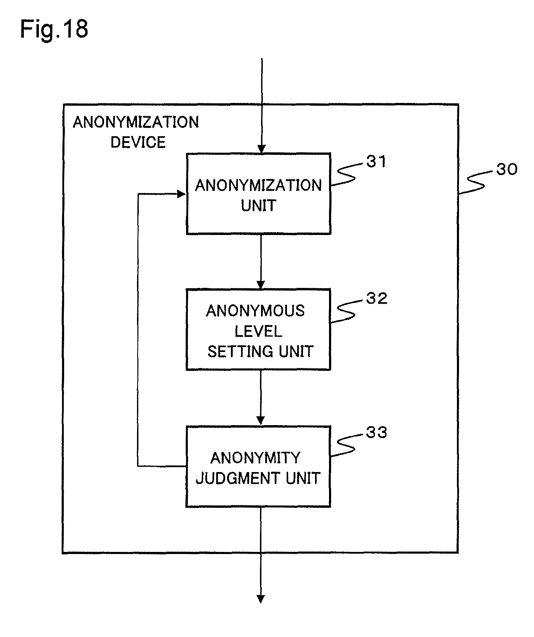

Fig. 18 is a block diagram showing an example of a structure of the anonymization device 30 according to the third exemplary embodiment. As shown in Fig. 18, the anonymization device 30 includes an anonymization unit 31, an anonymous level setting unit 32 and an anonymity judgment unit 33.

The anonymization unit 31 executes anonymization processing to a data set inputted from outside of the anonymization unit 31 with making each group of data as a processing unit. And, the anonymization unit 31 receives a data set from the anonymity judgment unit 33. The anonymization unit 31 outputs the data set to which anonymization processing is executed to the anonymous level setting unit 32.

The anonymous level setting unit 32 sets the adaptive anonymous level based on data included in the group for each of the groups to which the anonymization unit 31 executes anonymization processing. The anonymous level setting unit 32 outputs the data set to which the adaptive anonymous level is set for each of the groups to the anonymity judgment unit 33.

The anonymity judgment unit 33 judges whether or not the group satisfy the adaptive anonymous level which is set. Depending on a judgment result, the anonymity judgment unit 33 outputs the data set to the anonymization unit 31, or ends the processing and outputs the data set to a display device or the like.

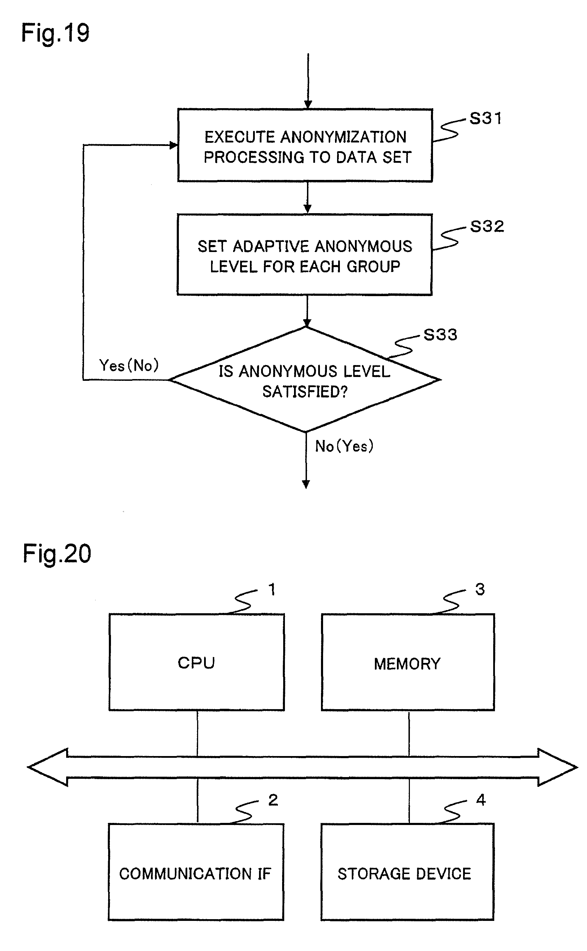

Fig. 19 is a flow chart showing an example of operations of the anonymization device 30 according to the third exemplary embodiment. As shown in Fig. 19, the anonymization unit 31 of the anonymization device 30 executes anonymization processing to the data set which is inputted from outside of the anonymization unit 31 or received from the anonymity judgment unit 33 as making a group be a processing unit (Step S31).

Next, the anonymous level setting unit 32 sets the adaptive anonymous level for each group to which the anonymization unit 31 executes anonymization processing (Step S32).

Next, the anonymity judgment unit 33 judges whether or not each group satisfy the corresponding adaptive anonymous level (Step S33).

According to the judgment result, the anonymity judgment unit 33 outputs the data set to the anonymization unit 31, or ends the processing and outputs the data set to a display device or the like.

As mentioned above, the anonymization device 30 according to the third exemplary embodiment can make all data satisfy the request levels of anonymization and prevent a decline of information values based on abstracting the whole data set.

The reason is because the anonymization device 30 sets the adaptive request level of anonymization (adaptive anonymous level) for each group.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

Fig. 20 is a block diagram showing an example of a hardware configuration of the anonymization device 10 according to the first exemplary embodiment. As shown in Fig. 20, the anonymization device 10 includes a CPU 1 (Central Processing Unit 1), a communication IF 2 (communication interface 2) for network connections, a memory 3 and a storage device 4 such as a hard disk which stores a program. Then, the anonymization device 10 realizes a computer device based on the structure shown in Fig. 20. However, the structure of the anonymization device 10 is not limited to the computer device shown in Fig. 20.

For example, the anonymization device 10 may receive a data set from outside via the communication IF 2.

The CPU 1 operates an operating system and controls the whole of the anonymization device 10. And, for example, the CPU 1 may read out the program and the data set from a computer-readable recording medium, which is not illustrated and mounted on a drive apparatus into the memory 3, and execute various kinds of processing based on this.

For example, a part of or all of the functions of the anonymization unit 11, the anonymous level setting unit 12, the anonymity judgment unit 13 and the group modification unit 14 may be realized using the CPU 1 and the program.

The storage device 4 is an optical disk, a flexible disk, a magnetic optical disk, an external hard disk or a semiconductor memory, for example, and stores a computer program so that reading is possible from a computer (CPU). The storage device 4 may store the data set and the computer program for realizing the anonymization device 10, for example. And, the computer program for realizing the anonymization device 10 may be downloaded from an outside computer which is not shown and is connected to a communication network.

In addition, the block diagrams used in each exemplary embodiment described so far shows not a structure of a hardware unit but blocks of function unit. These function blocks may be realized using any combination of hardware and software. And, a realization means of the constitution units of the anonymization device 10 is not limited to a physical device in particular. That is, the anonymization device 10 may be realized using one device made by combining physically, or it may be realized by connecting two or more physically separated devices with a wired or a wireless and using these plural devices.

A program of the present invention should just be a program which makes a computer execute each operation described in each of the above-mentioned exemplary embodiments.

And, the anonymization device 20 according to the second exemplary embodiment and the anonymization device 30 according to the third exemplary embodiment may be realized by the computer based on the hardware configuration shown in Fig. 20 like the anonymization device 10 according to the first exemplary embodiment. However, structures of the anonymization device 20 and the anonymization device 30 are not limited to the computer shown in Fig. 20.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application claims priority based on Japanese application Japanese Patent Application No. 2011-191355, filed on September 2, 2011, the disclosure of which is incorporated herein in its entirety.

### [Description of symbol]

- 1: CPU
- 2: Communication IF
- 3: Memory
- 4: Storage device
- 10, 20 and 30: Anonymization device
- 11, 21 and 31: Anonymization unit
- 12, 22 and 32: Anonymous level setting unit
- 13, 23 and 33: Anonymity judgment unit
- 14: Group modification unit

## Claims

1. An anonymization device, comprising:
anonymization means for executing anonymization processing to a data set including two data or over with making each group of the data as a processing unit;
anonymous level setting means for setting an adaptive anonymous level to each of the groups of the data set executed the anonymization processing;
anonymity judgment means for judging whether or not the group satisfies the set adaptive anonymous level; and further
said anonymization means executes anonymization processing to the data set executed the anonymization processing based on the judgment result by said anonymity judgment means.

2. The anonymization device according to claim 1, wherein
the adaptive anonymous level is a request level of data which has a request level of the highest anonymization in the group.

3. The anonymization device according to claims 1 or 2, wherein said anonymization means divides the data set into the groups as the anonymization processing, and
executes the anonymization processing recursively until said anonymity judgment means judges that at least one group does not satisfy the adaptive anonymous level.

4. The anonymization device according to claim 3, further comprising:
group modification means for modifying the groups based on the judgment result of said anonymity judgment means, wherein
said anonymization means
executes the anonymization processing recursively until said group modification means judges that it cannot modify such one of the groups that the one group satisfies the adaptive anonymous level.

5. The anonymization device according to claim 4, wherein
said anonymization means divides the data set or the group in the data set into two groups;
said group modification means:
cancels said division, when neither of the groups divided into two groups does not satisfy the adaptive anonymous level, or, when one group in the groups divided into two groups does not satisfy the adaptive anonymous level and the one group does not satisfy the adaptive anonymous level even if moving data which is included in the another group and is a part beyond the adaptive anonymous level, and
modifies the groups divided into two pieces by moving data from the another group to the one group when the one group in the groups divided into two does not satisfy the adaptive anonymous level, and when the one group satisfies the adaptive anonymous level if moving data which is included in the another group and is a part beyond the adaptive anonymous level.

6. The anonymization device according to claim 5, wherein
said group modification means
cancels the division even when the one group in the groups divided into two does not satisfy the adaptive anonymous level and when the one group satisfies the adaptive anonymous level if moving data which is included in the another group and is the part beyond the adaptive anonymous level, and when a distance between a position of the center of gravity of predetermined information of the one group and a position of predetermined information of data including a position of the predetermined information which is closest to the gravity center of the one group in data belonging to the another group is a predetermined threshold value or over on a data space.

7. The anonymization device according to claims 1 or 2, wherein said anonymization means
divides the data set into two data sets or over so that the number of data of unit group becomes a predetermined minimum value set, further,
integrates two groups as the anonymization processing when said anonymity judgment means judges the at least one group does not satisfy the adaptive anonymous level, and
executes the anonymization processing recursively until said anonymity judgment means judges that all groups satisfy the adaptive anonymous level.

8. An anonymization device according to claim 7, wherein
said anonymization means
selects a group which does not satisfy the adaptive anonymous level as a processing object,
selects another group having the closest distance between a gravity center of data of the selected group and a position of a gravity center of data of the another group on a data space as an integration object, and
integrates two selected groups.

9. The anonymization device according to claim 8, wherein
said anonymization means
selects a group which does not satisfy the adaptive anonymous level and has the greatest difference between the adaptive anonymous level and the number of data in the group as the processing object.

10. The anonymization device according to any one of claims 3, 4 or 7, wherein
outputting a data set to a display device after ending of recursive execution of the anonymization processing.

11. An anonymization method, comprising:
executing anonymization processing to a data set including two data or over with making each group of the data as a processing unit;
setting an adaptive anonymous level to each of the groups;
judging whether or not the group satisfies the set adaptive anonymous level having; and further
executing anonymization processing to the data set executed anonymization processing based on the judgment result.

12. A program causing a computer to execute:
executing anonymization processing to a data set including two data or over with making each group of the data as a processing unit;
setting an adaptive anonymous level to each of the groups;
judging whether or not the group satisfies the set adaptive anonymous level; and further
executing anonymization processing to the data set executed anonymization processing based on the judgment result.
